# EUROPÄISCHE PATENTSCHRIFT

(11) **EP 2 361 375 B1**
(45) Veröffentlichungstag und Bekanntmachung des Hinweises auf die Patenterteilung: **10.10.2018**
(21) Anmeldenummer: 09808977.4
(22) Anmeldetag: 19.11.2009
(51) Int. Cl.: G01N 15/00, G01N 15/02, G01N 21/03, G01N 21/53

(54) **ZELLAUFBAU FÜR LICHTSTREUDETEKTOREN MIT SELBSTFOKUSSIERENDEN EIGENSCHAFTEN**
CELL CONSTRUCTION FOR SCATTERED LIGHT DETECTORS HAVING SELF-FOCUSING PROPERTIES
CONSTRUCTION D'UNE CELLULE POUR DES DÉTECTEURS DE DIFFUSION DE LA LUMIÈRE À PROPRIÉTÉS AUTOFOCUS

(30) Priorität: 19.11.2008 DE 102008058607
(43) Veröffentlichungstag der Anmeldung: 31.08.2011
(73) Patentinhaber: Postnova Analytics GmbH, 86899 Landsberg (DE)
(72) Erfinder: FRÖSE, Diethelm, 12459 Berlin (DE)
(74) Vertreter: Hoffmann Eitle
(86) Internationale Anmeldenummer: PCT/DE2009/001684
(87) Internationale Veröffentlichungsnummer: WO 2010/057490

(56) Entgegenhaltungen:
- EP-A1- 1 489 403
- EP-A1- 1 801 560
- EP-A2- 0 182 618
- DE-B3-102005 062 174
- JP-A- 2006 189 292
- JP-A- 2007 271 365
- US-A- 6 120 734
- US-A1- 2002 064 800
- US-A1- 2005 239 210
- US-A1- 2007 210 269

## Beschreibung

Die Erfindung betrifft eine Vorrichtung zur Messung der Lichtstreueigenschaften einer Suspension, die durch eine Messzelle geleitet und von einem kollimierten Lichtstrahl beleuchtet wird sowie ein Verfahren zur Messung des an in einer Suspension befindlichen Molekülen gestreuten Lichtes.

Die Vermessung der statischen Lichtstreuung wird zur Charakterisierung (Größe, Masse, Form und Struktur) von Molekülen oder kolloidalen Substanzen herangezogen. Hierbei handelt es sich um eine absolute Quantifizierung, die ohne vorherige Kalibrierung oder Benutzung von Standardproben auskommt. Eine Probe wird mit einem kollimierten Lichtstrahl beleuchtet und das gestreute Licht unter verschiedenen Streuwinkeln gemessen.

Das Prinzip der Lichtstreuung ist in der Natur weitverbreitet. So kann es z.B. beim Sonnenuntergang oder beim Sichtbarwerden von Staubpartikeln beobachtet werden. Lichtstrahlen treffen auf ein stark streuendes Medium und werden von Partikeln von ihrem geometrisch vorgeschriebenen Weg abgelenkt. Dabei wird die Intensität der Lichtstrahlen durch Absorption und Streuung abgeschwächt. Die Streuung ist die Grundlage verschiedener physikalischer Phänomene, wie z.B. Beugung, Brechung und Reflexion.

Die Streuung kann in inelastische, quasielastische und elastische Streuung unterteilt werden, die sich durch ihre Frequenzverschiebung unterscheiden. Bei der inelastischen Streuung tritt eine Frequenzverschiebung von etwa 10¹¹ bis 10¹³ Hz auf. Bei der quasielastischen Streuung , bei der Licht zusätzlich mit Translations- bzw. Rotationsquanten eines Moleküls wechselwirkt und eine Frequenzverschiebung von 10 bis 10⁶ Hz auftritt. Bei der elastischen Lichtstreuung (z.B. statische Lichtstreuung) kommt es zu keiner Änderung der Wellenlänge (auch als kohärente Streustrahlung bezeichnet). Das zugrunde liegende Prinzip der Lichtstreuung lässt sich an einem sehr kleinen, optisch isotropen Gasmolekül veranschaulichen. Die Elektronen des Moleküls werden durch die auftreffende elektromagnetische Welle in eine Schwingung mit der Frequenz der erregenden Lichtquelle versetzt. Der so entstandene oszillierende Dipol strahlt wiederum elektromagnetische Strahlung derselben Frequenz ab, wobei die Intensität der Strahlung von der Stärke des induzierten Dipols abhängt, d.h. je polarisierbarer das Molekül ist, desto stärker der Dipol und desto höher die Intensität der emittierten Strahlung.

Wird eine Probe, beispielweise eine Suspension, in der sich mehrere Makromoleküle befinden, mit einem kollimierten Lichtstrahl beleuchtet, emittiert jedes Makromolekül Strahlung. Die Summe der Intensitäten der emittierten Strahlung ist proportional zur Konzentration der Makromoleküle in der Suspension sowie der molaren Masse der Moleküle. Des Weiteren kann aus der Winkelabhängigkeit der gestreuten Lichtintensitäten die Größe der im Kolloid enthaltenen Moleküle berechnet werden, da das an den verschiedenen Streuzentren im Makromolekül gestreute Licht interferiert und ein winkelabhängiges Streumuster erzeugt., Hierbei werden jeweils die Mittelwerte von den in der Zelle befindlichen Teilchen bestimmt. Im Stand der Technik sind Messgeräte beschrieben, die die Streueigenschaften von kolloidale Flüssigkeiten messen und zur Charakterisierung der Stoffeigenschaften heranziehen. Die EP 0 182 618 B1 offenbart eine Vorrichtung, welche die Messung der statischen Lichtstreuung mittels einer Messzelle beschreibt. Die Messzelle kann mit einem chromatographischen Aufbau gekoppelt werden, so dass die Teilchen nach Größe getrennt durch die Messzelle fließen. Hierfür ist eine runde Glaszelle mit einer Längsbohrung versehen, durch welche ein Flüssigkeitsstrom mit den enthaltenen Teilchen geleitet und mit einem Laserstrahl beleuchtet wird. Um die runde Glaszelle sind unter verschiedenen Winkeln Detektoren angeordnet, die das Streulicht aufnehmen. Um die Winkelabhängigkeit zu bestimmen, darf jeder Detektor nur einen kleinen Winkelbereich erfassen. Deshalb ist es bei diesem Gerät notwendig, durch Blenden den detektierten Bereich in der Bohrung auf einige Nanoliter zu verkleinern, was das Rauschen vergrößert und die Interferenz erhöht. Dies führt zwangsläufig zu einer Verminderung der Sensitivität.

Diese Technologie wurde zuerst in US 4,616,927 und EP 0 182 618 beschrieben. Diese offenbaren jedoch nur die Messung des Streulichts unter mehreren verschiedenen Winkeln. Der beobachtete Streubereich wird über Blenden auf einige Nanoliter beschränkt. Die EP 0 626 064 ist eine Weiterentwicklung, bei der unter 2 Winkeln gemessen wird, wobei das unter 15 Grad gestreute Licht mittels eines Linsen- und Blendensystems gesammelt wird.

In der US- 6,052,184 wird das gestreute Licht mittels Lichtleitern gesammelt, wobei diese jedoch auch nur einen sehr kleinen Flüssigkeitsbereich beobachten. Der Flüssigkeitsstrom wird hier senkrecht zum einfallenden Lichtstrahl geführt. In der EP 1 515 131 wird beschrieben, wie sich das Flüssigkeitsvolumen durch den Einsatz eines zweiten Flüssigkeitsstromes minimieren lässt, wobei das beobachtete Flüssigkeitsvolumen aber ebenfalls begrenzt wird.

DE102005062174 bezieht sich auf einen Messchip für die Durchführung von Messungen der Streuung von Licht durch eine Fluidprobe in einem Betreibergerät, wobei der Messchip eine aus einem transparenten Polymermaterial hergestellte Grundplatte aufweist, in der Grundplatte wenigstens eine Messzelle für die Aufnahme einer Fluidprobe und Fluidkanäle für die Zuführung und Abführung von Fluid zu und von der Messzelle vorgesehen sind und in und/ oder an der Grundplatte ausserhalb der Messzelle Spiegelflächen vorgesehen sind. Diese sind so angeordnet, dass sie von einer Fluidprobe in der Messzelle gestreutes Licht aus dem Messchip, vorzugsweise in Richtung eines in einem Betreibergerät vorgesehenen Lichtdetektors lenken. Nachteilig bei den im Stand der Technik offenbarten Vorrichtungen ist, dass das beobachtete Flüssigkeitsvolumen durch Blendensysteme oder den Einsatz von Lichtleitern, die nah an das Streuzentrum herangeführt werden, extrem eingeschränkt wird, um eine gute Winkelauflösung zu erhalten und Streulicht von Übergängen Luft/Glas/Medium fernzuhalten. Damit wird die Empfindlichkeit des Verfahrens vermindert.

Der Erfindung liegt die Aufgabe zugrunde, eine Messvorrichtung bereitzustellen, die nicht die im Stand der Technik aufgeführten Nachteile aufweist und eine Verbesserung der Messsensitivität erreicht.

Gelöst wird die Aufgabe durch die unabhängigen Ansprüche 1 und 7. Vorteilhafte Ausgestaltungsformen der Erfindung ergeben sich aus den Unteransprüchen.

Demgemäß umfasst die Erfindung eine Vorrichtung zur Messung der Lichtstreuungseigenschaften einer Suspension gemäß dem Gegenstand des Anspruchs 1.

Es war völlig überraschend, dass durch die erfindungsgemäße Vorrichtung die Mängel des Standes der Technik behoben werden können. Die Erfindung betrifft eine Vorrichtung, die der Messung der Lichtstreueigenschaften einer Suspension dient, die durch eine Messzelle geleitet wird und von einem monochromen kollimierten Lichtstrahl beleuchtet wird. Die Kohärenzlänge des Lichtstrahls kann bevorzugt größer, als die maximale Größe der zu messenden Moleküle sein, wobei vorzugsweise Moleküle mit einer Größe von 10 nm bis 1000 nm und einer Molekularmasse von 1000 Da bis 1 x 10⁹ Da charakterisiert werden. Die Zellgeometrie der Messzelle weist eine gekrümmte Fläche auf. In die Messzelle ist ein Kanal eingefasst, welcher die Zu- und Ableitung der Suspension zulässt. Des Weiteren wird durch den Kanal der Eintritt, Durchtritt und Austritt eines kollimierten Lichtstrahls in Richtung seiner Länge erlaubt. Das von den in der Suspension befindlichen Molekülen gestreute Licht, tritt durch das lichtdurchlässige Material der Messzelle hindurch und wird durch die erfindungsgemäße gekrümmte Oberfläche der Messzelle so fokussiert, dass lichtempfindliche Detektoren, die um die Messzelle herum angeordnet sind, dass Licht, das durch den Kanal und das lichtdurchlässige Material der Messzelle hindurch tritt, erfassen. Die bestrahlten Moleküle streuen das Licht in alle Richtungen, wobei die Streuintensität nach verschiedenen Winkeln von der Größe der Moleküle abhängt.

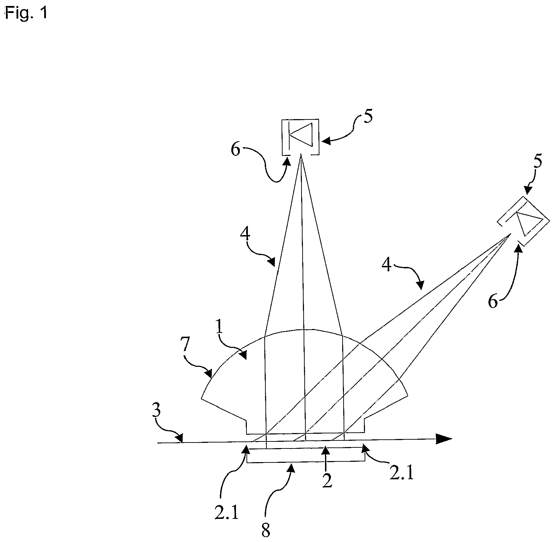

In einer bevorzugten Ausführungsform wird eine Vorrichtung zur Messung der Lichtstreuungseigenschaften einer Suspension, die durch eine Messzelle geleitet und von einem monochromen kollimierten Lichtstrahl bestrahlt wird, bereitgestellt, wobei die aus lichtdurchlässigem Material geformte Messzelle einen Kanal aufweist, der mindestens zwei Öffnungen enthält, und die Messzelle als Segment bevorzugt eines Ellipsoides, einer hyperbolischen Form, einer parabolischen Form oder eines Kreises ausgestaltet ist, und eine gekrümmte Fläche aufweist, wobei lichtempfindliche Detektoren um die Messzelle, bevorzugt um die gekrümmte Fläche angeordnet sind. Es war völlig überraschend, dass die bevorzugte Form der Messzelle, die Messung von kolloidalen Substanzen ganz besonders verbessert und das Hintergrundrauschen verringert. Hierbei bezeichnet im Sinne der Erfindung ein Segment bevorzugt eine Teilfläche, die bevorzugt eine gekrümmte und eine der gekrümmten Fläche gegenüberliegenden ebenen Fläche aufweist. Eine gekrümmte Fläche oder Seite bezeichnet im Sinne der Erfindung bevorzugt eine Krümmung, die eine Richtungsänderung pro Längeneinheit aufweist, das heißt es tritt bevorzugt eine nach außen quadratisch zunehmende Abweichung der Fläche von ihrer Tangentialebene auf. Insbesondere diese bevorzugte Ausgestaltungsform der Messzelle ermöglicht eine kompakte und kostengünstige Bauform. Eine derartige vorteilhafte Messzelle ist exemplarisch in Fig. 1 dargestellt.

Eine Suspension bezeichnet im Sinne der Erfindung eine heterogene Mixtur, in der Feststoffe (Moleküle) in einem Fluid verteilt sind.

Ein Kanal bezeichnet im Sinne der Erfindung eine Aussparung im Zellkörper, durch den das zu untersuchende Medium fließt und in dem es von einem monochromen kollimierten Lichtstrahl, welcher bevorzugt aus parallel verlaufenden Lichtstrahlen besteht und einfarbig ist, beleuchtet wird. Die Kohärenzlänge des Lichtes ist bevorzugt größer als der Durchmesser der zu untersuchenden Makromoleküle.

Durch die erfindungsgemäße Vorrichtung werden Vorteile gegenüber dem Stand der Technik erzielt. So ermöglicht die Vorrichtung die Aufnahme des gesamten Streulichtes, welches von der kolloidalen Suspension durch die Messzelle dringt und von den Detektoren aufgenommen wird. Somit wird das Streulicht im Wesentlichen der gesamten in der Messzelle vorliegenden Suspension erfasst, wodurch ein Streuvolumen im Mikroliterbereich messbar ist. Im Stand der Technik beschriebene Messzellen weisen nur ein Streuvolumen im Nanoliterbereich auf.

Ein weiterer Vorteil der erfindungsgemäßen Vorrichtung ist, dass bedingt durch das erhöhte Streuvolumen die Intensität des gestreuten Lichtes erhöht ist, da die Intensität proportional zu dem Streuvolumen ist. Eine Erhöhung der Intensität resultiert in einer Verstärkung des Signals und führt zu einer verbesserten Sensitivität und erlaubt das Messen von kolloidalen Suspensionen in niedrigen Konzentration.

Ein weiterer Vorteil der erfindungsgemäßen Vorrichtung ist die Reduktion des Hintergrundrauschens. Die Teilchen in der Suspension bewegen sich in reziproker Abhängigkeit zu ihrer Größe in zufälligen Richtungen. Aus dieser Bewegung resultiert ein Messfehler bei der Messung einer kolloidalen Suspension, der als Rauschen bezeichnet wird und das Messergebnis verfälschen kann. Je kleiner das zu beobachtende Volumen der Messzelle, desto weniger Moleküle sind in der Suspension enthalten und umso stärker ist die zeitliche Schwankung der gestreuten Strahlung. Hieraus resultiert eine Vergrößerung des Rauschens. Bei einer Vergrößerung des zu messenden Volumens, wird die Anzahl der Moleküle in der Messzelle erhöht und der Einfluss des Rauschens verringert, da mehr Streustrahlen an die Detektoren gelangen und so die Signale gemittelt werden können.

Die Erfindung löst somit ein lang bestehendes Problem des Standes der Technik und ermöglicht die Erfassung des gesamten Streulichts und führt somit zu einer Verbesserung der Sensitivität.

Es ist bevorzugt, dass die Geometrie der Messzelle, bevorzugt ein Segment einer gekrümmten Fläche, insbesondere eines Ellipsoides, eine hyperbolische, eine parabolische oder die Form eines Kreises aufweist.

Eine vorteilhafte Ausführungsform des Erfindungsgegenstandes sieht vor, dass die Messzelle aus Glas, Polymer oder einer Kombination aus beiden oder einer Flüssigkeit gefertigt ist, welches eine höhere Brechzahl als die zu messende Suspension oder Luft aufweist. Ein Polymer bezeichnet eine chemische Verbindung, die aus Ketten oder verzweigten Molekülen besteht, die aus gleichen oder gleichartigen Einheiten aufgebaut sind. Beispiele hierfür sind Polymere aus Polyethylen, Polypropylen, Polyvinylchlorid, Polymethylmethacrylat, Polyester oder Polyurethan. Die Brechzahl, früher Brechungsindex oder Brechungskoeffizient, ist eine Materialkonstante und beschreibt die Ausbreitung des Lichtes, d.h. elektromagnetischer Wellen, in einem optisch dichten Medium. Sie kann aus dem Verhältnis zwischen Phasengeschwindigkeit des Lichtes im Vakuum und seiner Phasengeschwindigkeit im jeweiligen Medium bestimmt werden. So beträgt z.B. die Brechzahl für sichtbares Licht im Vakuum exakt 1, für Luft auf Meeresniveau 1,000292, für Quarzglas 1,46 und für Polymere ungefähr 1,5. Durch die erfindungsgemäße Ausführungsform wird erreicht, dass die gestreuten Strahlen so gebrochen werden, dass sie in einem Punkt fokussiert werden, an dem lichtempfindliche Detektoren installiert sind. Somit kann auch die von den Detektoren weggestreute Streustrahlung in diese hineinfokussiert werden. Folglich wird durch die vorteilhafte Ausführungsform erreicht, dass im Wesentlichen alle aus der Messzelle kommende Streustrahlen von den lichtempfindlichen Detektoren gesammelt werden.

Vorteilhafterweise ist vorgesehen, dass die Messzelle eine optisch polierte Oberfläche aufweist und ein Querschnitt der Messzelle in der Ebene des Kanals gekrümmt ist und der Kanal entlang einer Sehne verläuft, wobei der Kanal kürzer als der kleinste Durchmesser der gekrümmten Fläche ist. Die gekrümmte Oberfläche, durch die das Licht austritt, ist nach Standardverfahren zu polieren, um Winkelverfälschungen oder Streuung an den optischen Übergängen zu minimieren. Eine Kreissehne ist definiert als Strecke, die durch die Verbindung von zwei auf einem Kreis befindlichen Punkte entsteht. Eine polierte Oberfläche wird durch konventionelle Polierverfahren erreicht. So kann die Oberfläche von z.B. Quarzglas durch Flammpolieren und mechanisches Polieren bearbeitet werden. Auch das Polieren mittels Laserstrahlen ist möglich.

Durch die bevorzugte Gestaltung der Messzelle wird erreicht, dass das von den Molekülen gestreute Licht beim Übergang Suspension - Messzelle zum Einfallslot hin gebrochen wird, da die Brechzahl der Messzelle bevorzugt größer als die Brechzahl des Mediums ist. Das heißt, Lichtstrahlen, die unter einem bestimmten Winkel im Kanal gestreut wurden, laufen durch die Messzelle parallel zueinander. Durch die bevorzugte Ausführungsform werden die in der Ebene des Kanals (horizontal) gestreuten Lichtstrahlen beim Übergang Messzelle - umgebendes Medium auf einen Punkt außerhalb der Messzelle fokussiert, an dem lichtempfindliche Detektoren angeordnet sind. Hierdurch ist das Erfassen des kompletten in der horizontalen Ebene gestreuten Lichtes möglich, wodurch die Sensitivität der Vorrichtung maßgeblich erhöht wird. Des weiteren wird durch die Ausführungsform erreicht, dass auch Streustrahlen, die von den Detektoren weggestreut sind, in diese hineinfokussiert werden. Es kann so wesentlich mehr Streulicht von den lichtempfindlichen Detektoren erfasst werden.

Die Messzelle weist eine polierte Oberfläche auf und ein Querschnitt der Messzelle in der Ebene senkrecht zur Ebene des Kanals ist gekrümmt. Dadurch, dass die Messzelle nicht nur in der Ebene des Kanals (horizontal) eine Krümmung aufweist, sondern auch in der Ebene senkrecht zu der Ebene des Kanals (vertikal), werden die durch die Messzelle parallel verlaufenden Strahlen bei dem Erreichen der Außenseite der Messzelle, in einem Punkt außerhalb der Messzelle fokussiert. Es findet somit bevorzugt eine vertikale und horizontale Fokussierung der gestreuten Strahlen statt und alle unter einem Winkel gestreuten Strahlen werden in einem Punkt außerhalb der Messzelle fokussiert. Durch die bevorzugte Ausführungsform wird das gesamt Streulicht der Messzelle erfasst und das gemessene Streuvolumen vergrößert, was zu einer Verbesserung der Sensitivität führt.

In einer weiteren bevorzugten Ausführungsform sind auf der gekrümmten Fläche oder Seite in einer Ebene mit dem Kanal lichtempfindliche Detektoren (horizontal) angeordnet, um das von der bestrahlten Suspension gestreute und mittels der Messzelle fokussierte Licht aufzunehmen. Ein Detektor ist eine im Stand der Technik beschriebene Vorrichtung, welche eine einfallende Lichtintensität in elektrische Signale umwandelt, was z. B. mittels lichtempfindlicher Dioden oder Photomultiplier erfolgt und an Verarbeitungsgeräte weiterleitet, die die gemessenen Signal in die gewünschten Einheiten umrechnen. Durch die Anordnung der Detektoren auf der gekrümmten Seite wird erreicht, dass Streulicht welches nicht von der Suspension erzeugt wurde, sondern z.B. an den seitlichen Rändern des Kanals entstand, nicht in die Detektoren gelangt. Somit wird das Einfließen von störendem Streulicht in die Messung verhindert und Messfehler reduziert. Des Weiteren kann durch die bevorzugte Ausführungsform eine kompakte und Materialsparende Bauweise verwirklicht werden, da nur auf einer Seite, nämlich der gekrümmten, lichtempfindliche Detektoren angeordnet sind.

Es ist weiterhin bevorzugt, dass Licht auf der gekrümmten Fläche oder Seite in einer Ebene senkrecht zu der Ebene des Kanals vorzugsweise durch die gekrümmte Seite der Oberfläche oder durch Fresnellinsen und/oder Zylinderlinsen fokussiert und von lichtempfindlichen Detektoren erfasst wird. Die Fokussierung der gestreuten Lichtstrahlen bei dem Übergang Messzelle - umgebendes Medium, wird vorzugsweise durch die Krümmung der Oberfläche erreicht. Die Messzelle ist aus einem Material mit einer höheren Brechzahl als Luft hergestellt, wodurch die austretenden Lichtstrahlen fokussiert werden. Die Fokussierung kann auch mithilfe von Fresnellinsen und/oder Zylinderlinsen erfolgen. Fresnellinsen sind kompakte optische Linsen, die durch eine Aufteilung in ringförmige Stufen charakterisiert sind. Durch die Stufen wird eine konstante Brennweite erreicht, d.h. der Abstand des Brennpunktes oder Fokus ändert sich nicht. Die charakteristische Form der Fresnellinsen ermöglicht eine Einsparung an Gewicht, wodurch sie in Anwendungen wo das Gewicht ausschlaggebend ist, zum Einsatz kommen. Zylinderlinsen haben in zwei senkrecht zueinander stehenden Richtungen verschiedene Krümmungen, d.h. Zylinderlinsen sind bevorzugt Abschnitte eines Zylinders. Beide Linsenarten können als weitere Ausführungsform die Fokussierung der von der Suspension gestreuten Lichtstrahlen ausüben und diese in die Detektoren fokussieren. Durch die gewichtseinsparende Form der Linsen wird eine kompakte Ausführungsform realisiert und zusätzlich ist durch die Linsen die Wartung der bevorzugten Ausführungsform vereinfacht, da diese einfach durch den Fachmann austauschbar sind. Die bevorzugten Ausführungsformen führen dazu, dass die gestreuten Strahlen beim Übergang Messzelle - umgebendes Medium in Detektoren fokussiert werden. Durch diese Anordnung ist das Erfassen des gesamten Streulichts möglich und kein Streulicht geht verloren. Eine Verbesserung der Sensitivität ist das Resultat.

In einer weiteren bevorzugten Ausgestaltung der Erfindung weisen die lichtempfindlichen Detektoren, die das gestreute Licht aufnehmen, ein Blendensystem auf, welches den zu beobachteten Winkelbereich definiert, sofern der Fokus in der Blende liegt. Ein Blendensystem beschreibt eine an die Detektoren angebrachte Vorrichtung, die nur die Erfassung bestimmter Strahlen zulässt. So können Strahlen, die unter einem Winkel auf die Detektoren treffen, der nicht zur Messung herangezogen werden soll, durch das Blendensystem ausgeschlossen werden. Der Bereich der zu messenden Strahlen (der Winkelbereich) wird durch das Blendensystem eingestellt. Vorzugsweise ist die Blende vor dem Detektor genau im Fokus des gestreuten Lichtes angebracht und dient dazu, den detektierten Winkelbereich zu minimieren. Weiterhin werden durch die Blenden Strahlen, die nicht exakt im Fokus liegen, ausgeblendet. Durch diese Anordnung wird das gesamte Streulicht, das im Kanal durch die Bestrahlung der Suspension entsteht gesammelt und so die Sensitivität der weiteren Ausgestaltung der Erfindung verbessert. Zusätzlich ermöglicht die Verwendung eines Blendensystems die Anpassung an Eigenschaften der zu messenden Suspension, wie z.B. hochkonzentrierte Suspensionen, Suspensionen mit großen oder kleinen Molekülen, da dieses einfach durch den Fachmann einstellbar ist.

In einer bevorzugten Ausführungsform sind auf der der gekrümmten Fläche oder Seite gegenüberliegenden Seite keine Detektoren angeordnet, sondern es wird eine lichtabsorbierende Vorrichtung installiert, welche Licht, welches nicht von den Detektoren erfasst werden soll, absorbiert. So soll z.B. durch die lichtabsorbierende Vorrichtung Streulicht, was an den Zu- und Ableitungen des Kanals entsteht, nicht in die lichtempfindlichen Detektoren gelangen. Dieses Streulicht würde die Messung der Streustrahlen, die von der zu messenden Suspension erzeugt wurden, verfälschen, da nicht mehr zwischen zu messendem Streulicht und dem nicht zu messenden Streulicht differenziert werden könnte. Folglich würde die Charakterisierung der kolloidalen Suspension auf falschen Messdaten aufbauen. Aus diesem Grund sind die Detektoren nicht komplett um die Messzelle angeordnet. Bevorzugt ist eine Anordnung der Detektoren auf nur einer Seite der Messzelle, insbesondere auf der Seite, die als gekrümmte Fläche, bevorzugt als gekrümmte Fläche eines Segmentes ausgeführt ist. Durch die bevorzugte Ausführungsform wird sichergestellt, dass im Wesentlichen alles Licht das von der Suspension gestreut wird von den Detektoren erfasst wird und zusätzlich Licht, welches nicht von der Lichtstreuung der Suspension herrührt, nicht von den Detektoren erfasst wird. Als Bespiel für eine solche lichtabsorbierende Vorrichtung sei eine Fangblende aufgeführt, die nicht zu messendes Licht entfernt und so eine Verfälschungen des Messergebnisses verhindert. Weiterhin kann eine Beschichtung der Messzelle mit einem absorbierendem Farbstoff vorteilhaft sein.

In einer weiteren bevorzugten Ausführungsform, weist der monochrome kollimierte Lichtstrahl eine Querschnittsabmessung auf, die kleiner ist als die des Kanals. Ein monochromer kollimierter Lichtstrahl beschreibt einen einfarbigen und parallel verlaufenden Lichtstrahl. Durch die bevorzugte Ausführungsform wird sichergestellt, dass keine Reflexionen entstehen, wenn die einfarbigen und parallel verlaufenden Lichtstrahlen durch den Kanal laufen.

Des Weiteren wird durch die Verwendung eines monochromen kollimierten Lichtstrahls sichergestellt, dass keine Interferenzen entstehen und die gestreuten Lichtstrahlen sich nicht gegenseitig beeinflussen.

Die Erfindung betrifft auch ein Verfahren gemäß dem Gegenstand des Anspruchs 7.

Das Verfahren ermöglicht die Messung des gestreuten Lichts, welches durch die Bestrahlung einer kolloidalen Suspension entsteht. Hierfür wird eine kolloidale Suspension durch einen Kanal geleitet, der längs einer Kreissehne durch eine Messzelle verläuft. Ein monochromer kollimierter Lichtstrahl verläuft längs zu diesem Kanal und bestrahlt die Suspension wodurch Licht durch die kolloidalen Bestandteile gestreut wird. Die unter einem bestimmten Winkel gestreuten Lichtstrahlen werden beim Übergang Suspension - Messzelle zum Einfallslot hin gebrochen und verlaufen parallel durch die Messzelle. Beim Übergang Messzelle - umgebendes Medium, werden die parallel laufenden Streustrahlen durch die polierte, gekrümmte Form der Messzelle fokussiert. Um die runde oder gekrümmte Seite der Messzelle sind lichtempfindliche Detektoren angeordnet, die das fokussierte Licht empfangen. Die Detektoren befinden sich in horizontaler und vertikaler Ebene, d.h. in einer Ebene mit dem durch die Messzelle laufenden Kanal und in einer Ebene senkrecht zu der Ebene des Kanals. Somit kann im Wesentlichen alles Licht, was durch die Suspension gestreut wird von den Detektoren erfasst werden. Das von den Detektoren empfangene Licht wird bevorzugt in elektrische Signale umgewandelt und zur Berechnung der gewünschten Eigenschaften, wie z.B. Größe und Konzentration an Verarbeitungsgeräte weitergeleitet. Das Verfahren ermöglicht die Messung eines großen Streuvolumens, was direkt proportional zu der Intensität der Strahlen ist. Eine höhere Intensität korreliert mit einer höheren Sensitivität, da auch die Streustrahlung von Molekülen, die z.B. in einer geringen Konzentration in der Suspension vorliegen, verstärkt wird und von den Detektoren erfasst werden kann. Des Weiteren wird durch die Erhöhung des Streuvolumens eine Erniedrigung des Rauschens erreicht. Das Rauschen entsteht durch zufällige Bewegungen der Moleküle in der Suspension und der daraus resultierenden zeitlichen Verschiebung der Streustrahlen, wodurch Interferenzen entstehen, die die Messung der Streustrahlen erschweren, da sich Lichtstrahlen gegenseitig beeinflussen, d.h. verstärken oder auslöschen können. Das Verfahren erniedrigt das Rauschen durch eine Erhöhung des Streuvolumens, wodurch mehr Moleküle in der Suspension erfasst werden und eine Mittelung der Streustrahlen den Einfluss der Bewegung verringert. Durch das Verfahren wird somit ein lang im Stand der Technik bestehendes Problem gelöst. Die Sensitivität der Messung wird durch die Erfassung eines größeren Streuvolumens verbessert und im Wesentlichen wird das gesamte Streulicht der zu messenden Suspension mittels lichtempfindlicher Detektoren erfasst. Es handelt sich hierbei um ein einfaches und kostengünstiges Verfahren, welches Eigenschaften einer kolloidalen Suspension bestimmt.

Das Verfahren ist dadurch gekennzeichnet, dass die Messzelle in der Ebene des Kanals und in der Ebene senkrecht zu der Ebene des Kanals eine gekrümmte Fläche darstellt. Durch diese Form der Messzelle wird erreicht, dass die unter einem Winkel gestreuten Lichtstrahlen beim Übergang Suspension - Messzelle zum Einfallslot hin gebeugt werden und parallel durch die Messzelle laufen und beim Übergang Messzelle - umgebendes Medium in einem Punkt außerhalb der Messzelle fokussiert werden. An diesem Punkt angebrachte Detektoren erfassen das Streulicht. Somit erlaubt die bevorzugte Ausführungsform, die Erfassung im Wesentlichen des gesamten Streulichts, wodurch die Sensitivität erhöht wird.

Eine weitere Ausführungsform des Verfahrens ist dadurch gekennzeichnet, dass die lichtempfindlichen Detektoren auf der runden Seite der Messzelle angeordnet sind. Die Anordnung der lichtempfindlichen Detektoren auf der gekrümmten Seite des Messzelle bewirken, dass im Wesentlichen Streulicht, welches durch die Messzelle fokussiert wird, in die Detektoren fällt und zur Berechnung der Eigenschaften der kolloidalen Suspension herangezogen werden kann. Lichtstrahlen, die an den Zu- und Ableitungen des Kanals entstehen oder Reflexionen dürfen nicht von den Detektoren erfasst werden, da durch diese Lichtstrahlen das Messergebnis verfälscht wird und die kolloidale Suspension nicht korrekt bestimmt werden kann. Um nicht zu messende Lichtstrahlen oder Reflexionen von der Messung auszuschließen, ist vorteilhafterweise auf der der runden Seite der Messzelle gegenüberliegenden Seite eine lichtabsorbierende Vorrichtung, wie z.B. eine Fangblende oder eine lichtabsorbierende Beschichtung installiert. Des Weiteren sind die lichtempfindlichen Detektoren bevorzugt mit einem Blendensystem ausgestattet, welches den zu messenden Winkelbereich definiert. Hierdurch wird eine akkurate Messung der Lichtstreuung möglich, da im Wesentlichen das gesamte aus der Messzelle kommende Streulicht erfasst wird und zur Berechnung der Eigenschaften der kolloidalen Suspension herangezogen werden.

Weitere vorteilhafte Maßnahmen sind in den übrigen Unteransprüchen beschrieben.

Die Erfindung wird nunmehr anhand von Figuren beispielhaft näher beschrieben, ohne jedoch auf diese beschränkt zu sein; es zeigt:
- Fig. 1: Horizontaler Schnitt durch die Zellgeometrie
- Fig. 2: Vertikaler Schnitt durch die Zellgeometrie

Fig. 1 zeigt schematisch einen horizontalen Schnitt durch die Zellgeometrie. Die Messzelle 1 besteht vorzugsweise aus Glas, Polymer oder einer Kombination aus beiden oder einer Flüssigkeit, die eine höhere Brechzahl als Luft aufweist. In die Messzelle1, die eine gekrümmte Fläche 7 aufweist, ist ein Kanal 2 eingelassen und der Kanal 2 verläuft entlang einer Sehne durch die Messzelle 1. Ein Querschnitt der Messzelle 1 in der Ebene des Kanals 2 und ein Querschnitt in der Ebene senkrecht zu der Ebene des Kanals 2 stellt eine gekrümmte Fläche 7 dar. Durch den Kanal 2 wird eine kolloidale Suspension geleitet, die von einem monochromen kollimierten Laserstrahl 3 bestrahlt wird. Der Laserstrahl 3 läuft längs durch den Kanal 2, wobei der Querschnitt des Laserstrahls 3 kleiner als der des Kanals 2 ist. Beim Auftreffen der Lichtstrahlen 3 auf die Moleküle der Suspension, wird das Licht abhängig von der Größe der Moleküle in alle Richtungen gestreut. Die Streustrahlen 4 werden beim Übergang Suspension - Messzelle zum Einfallslot hin gebrochen und laufen parallel durch die Messzelle 1. Treffen die Streustrahlen 4 in horizontaler Ebene, d.h. in der Ebene des Kanals auf die gekrümmte polierte Oberfläche, werden die Strahlen auf einen Punkt fokussiert, an den lichtempfindliche Detektoren 5 angebracht sind. Demgemäß werden alle unter einem bestimmten Winkel gestreuten Strahlen 4, durch die gekrümmte Oberfläche 7 so fokussiert, dass im Wesentlichen das gesamte Streulicht 4 der Suspension durch die lichtempfindlichen Detektoren 5 erfasst wird. Auch Streustrahlen 4, die von den Detektoren 5 weggestreut sind, werden durch die runde Oberfläche in diese hineinfokussiert. Die lichtempfindlichen Detektoren 5 verarbeiten die eingehenden Signal, wandeln diese in elektrische Signal um und geben diese an entsprechende Verarbeitungsgeräte weiter. An den lichtempfindlichen Detektoren 5 ist ein Blendensystem 6 installiert. Das Blendensystem 6 erlaubt die Einschränkung der zu erfassenden Streustrahlen 4, mittels einer Blende, die nur das Eindringen von Lichtstrahlen in die lichtempfindlichen Detektoren 5 zulässt, welche unter einem definierten Winkel gestreut wurden. So kann verhindert werden, dass Reflexionen oder Streulicht, was seitlich aus den Zu- und Ableitungen des Kanals 2.1 austritt, von den lichtempfindlichen Detektoren 5 erfasst wird und zur Berechnung herangezogen wird. Durch dieses störende Streulicht würde das Messergebnis verfälscht werden. Vorteilhafterweise ist die Messzelle 1 als Segment ausgestaltet, das heißt gegenüberliegend zu der gekrümmten Fläche oder Seite 7 ist bevorzugt eine nicht-gekrümmte Fläche 8 angeordnet.

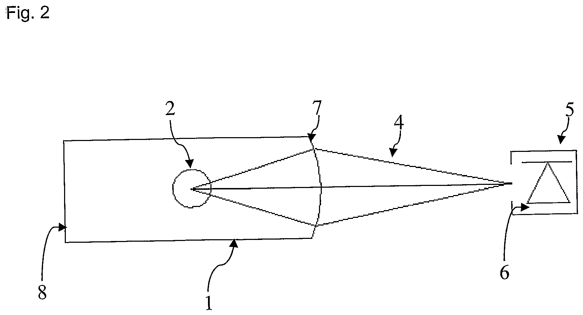

Fig. 2 stellt eine schematische Darstellung eines vertikalen Schnittes durch die Zellgeometrie dar. Durch den in die Messzelle 1 eingebrachten Kanal 2 strömt eine kolloidale Suspension, die von einem Lichtstrahl 3 bestrahlt wird. Die Messzelle 1 weist in der Ebene senkrecht zu der Ebene des Kanals eine gekrümmte Fläche auf und der Kanal 2 verläuft entlang einer Sehne. Somit stellt die Messzelle 2 in der Ebene des Kanals 2 (horizontal) in der Ebene senkrecht zu der Ebene des Kanals 2 (vertikal) eine gekrümmte Fläche dar. Die Messzelle 2 hat somit eine gekrümmte Seite. Auf der gekrümmten Seite gegenüberliegenden Seite ist eine lichtabsorbierende Vorrichtung, wie z.B. eine Fangblende angeordnet, die reflektierende Strahlen oder Strahlen, die durch Zu- und Ableitungen des Kanals 2.1 aus der Messzelle 1 gelangen, absorbiert. Diese Lichtstrahlen sind nicht für die Messung zu berücksichtigen und verfälschen das Messergebnis, falls sie von den lichtempfindlichen Detektoren 5 erfasst werden. Der längs durch den Kanal 2 laufende Lichtstrahl 3 bestrahlt die kolloidale Suspension und Licht wird von den Molekülen in alle Richtungen gestreut. Die unter einem bestimmten Winkel gestreuten Lichtstrahlen 4 werden beim Übergang Suspension - Messzelle zum Einfallslot hin gebrochen und verlaufen parallel durch die Messzelle 1. Die in einer Ebene mit dem Kanal 2 (horizontal) gestreuten Lichtstrahlen 4 werden beim Übergang Messzelle - umgebendes Medium von der polierten runden Seite der Messzelle 1 in die lichtempfindlichen Detektoren 5 fokussiert, wobei ein Blendensystem 6 den zu messenden Winkelbereich bestimmt. Die in einer Ebene senkrecht zu der Ebene des Kanals 2 (vertikal) gestreuten Lichtstrahlen 4 werden ebenfalls durch die polierte runde Seite der Messzelle 1 so fokussiert, dass die fokussierten Strahlen 4 von den lichtempfindlichen Detektoren 5 erfasst werden. Die Fokussierung kann zusätzlich durch Fresnellinsen und/oder Zylinderlinsen erfolgen. Fresnellinsen sind kompakte optische Linsen, die durch eine Aufteilung in ringförmige Stufen charakterisiert sind. Durch die Stufen wird eine konstante Brennweite erreicht, d.h. der Abstand des Brennpunktes oder Fokus ändert sich nicht. Die charakteristische Form der Fresnellinsen ermöglicht eine Einsparung an Gewicht, wodurch sie in Anwendungen wo das Gewicht ausschlaggebend ist, zum Einsatz kommen. Zylinderlinsen haben in zwei senkrecht zueinander stehenden Richtungen verschiedene Krümmungen, d.h. im engeren Sinne sind Zylinderlinsen Abschnitte eines Zylinders. Beide Linsenarten können als weitere Ausführungsform die Fokussierung der von der Suspension gestreuten Lichtstrahlen ausüben und diese in die Detektoren 5 fokussieren. Lichtstrahlen, die durch Reflexion und/oder Lichtstreuung an der Zu- und Ableitung des Kanals 2.1 entstehen, werden durch das an den lichtempfindlichen Detektoren 5 angebrachtes Blendensystem 6 an dem Eindringen in die Detektoren gehindert. Somit wird der zu messende Winkelbereich definiert. Durch die vertikale und horizontale Fokussierung wird im Wesentlichen das gesamte Streulicht 4, was durch die Bestrahlung der kolloidalen Suspension entsteht in die lichtempfindlichen Detektoren 5 geleitet. So wird das zu messende Streuvolumen vergrößert und die Sensitivität verbessert.

### Bezugszeichenliste

- 1: Messzelle
- 2: Kanal
- 2.1: Zu- und Ableitung des Kanals
- 3: Lichtstrahl
- 4: Von der Suspension gestreutes Licht
- 5: Lichtempfindliche Detektoren
- 6: Blendensystem
- 7: Gekrümmte Fläche/Seite
- 8: Nicht-gekrümmte Fläche/Seite

## Patentansprüche

1. Vorrichtung zur Messung der Lichtstreuungseigenschaften einer Suspension, umfassend eine Messzelle (1), durch die eine von einem monochromen kollimierten Lichtstrahl (3) bestrahlte Suspension geleitet wird, und lichtempfindliche Detektoren (5),
wobei die Messzelle (1) einen Kanal (2) aufweist, welcher die Zu- und Ableitung der Suspension zulässt, der den Eintritt, Durchtritt und Austritt des monochromen kollimierten Lichtstrahls (3) in Richtung seiner Länge erlaubt,
wobei die Messzelle eine polierte Oberfläche aufweist, die Zellgeometrie der Messzelle (1) in der Ebene des Kanales eine gekrümmte Fläche (7) darstellt, der Querschnitt der Messzelle in einer Ebene senkrecht zur Ebene des Kanals gekrümmt ist und die Messzelle aus lichtdurchlässigem Material geformt ist und von der das gesamte von der in der Messzelle vorliegenden Suspension unter einem bestimmten Winkel gestreute Licht (4) in der Ebene des Kanals in einem Punkt außerhalb der Messzelle fokussiert wird, erreicht durch die gekrümmte Oberfläche (7) der Messzelle (1),
wobei die lichtempfindlichen Detektoren (5) in den Punkten, in denen das gestreute Licht fokussiert wird, angeordnet sind, so dass sie das von der Suspension gestreute Licht (4) erfassen, das durch den Kanal und das lichtdurchlässige Material der Messzelle (1) hindurch tritt.

2. Vorrichtung nach Anspruch 1,
**dadurch gekennzeichnet, dass**
die Geometrie der Messzelle (1) eine gekrümmte Fläche (7) eines Ellipsoides, eine hyperbolische, eine parabolische oder die Form eines Kreises aufweist.

3. Vorrichtung nach einem der vorstehenden Ansprüche,
**dadurch gekennzeichnet, dass**
die Messzelle vorzugsweise aus Glas, Polymer oder einer Kombination der genannten Materialien oder einer Flüssigkeit hergestellt sein kann, vorzugsweise mit einer höheren Brechzahl als die einer zu messenden Suspension, oder Luft.

4. Vorrichtung nach einem der vorstehenden Ansprüche,
**dadurch gekennzeichnet, dass**
die lichtempfindlichen Detektoren (5) ein Blendensystem (6) aufweisen, welches den zu beobachteten Winkelbereich definiert, sofern der Fokus in der Blende liegt.

5. Vorrichtung nach einem der vorstehenden Ansprüche,
**dadurch gekennzeichnet, dass**
auf der der gekrümmten Fläche (7) gegenüberliegenden Seite (8) keine Detektoren angeordnet sind und eine lichtabsorbierende Vorrichtung Licht, welches nicht von den Detektoren erfasst werden soll, absorbiert.

6. Vorrichtung nach einem der vorstehenden Ansprüche,
**dadurch gekennzeichnet, dass**
der monochrome kollimierte Lichtstrahl (3) eine Querschnittsabmessung aufweist, die kleiner ist als die des Kanals.

7. Verfahren zur Messung des an in einer Suspension befindlichen Molekülen gestreuten Lichtes (4) mittels einer Vorrichtung nach einem der vorhergehenden Ansprüche, wobei
a. eine Suspension durch einen Kanal (2) geleitet wird, der längs einer Sehne durch eine Messzelle (1) verläuft,
b. ein kollimierter, monochromer Lichtstrahl (3) längs zu diesem Kanal läuft,
c. die parallel laufenden, von der in der Messzelle vorliegenden Suspension unter einem bestimmten Winkel gestreuten Lichtstrahlen (4) die gekrümmte Form (7) der Messzelle (1) durchdringen,
d. durch die polierte, gekrümmte Form der Messzelle (1) in der Ebene des Kanals in einem Punkt außerhalb der Messzelle fokussiert werden, und
e. die in den Punkten, in denen das gestreute Licht fokussiert wird, angeordneten Detektoren (5) das fokussierte Licht empfangen, wobei
die Messzelle (1) in der Ebene des Kanals (2) und in der Ebene senkrecht zu der Ebene des Kanals (2) eine gekrümmte Fläche (7) darstellt.

## Claims

1. Device for measuring the light scattering properties of a suspension, comprising a measuring cell (1) through which a suspension irradiated by a monochromatic collimated light beam (3) is passed, and light-sensitive detectors (5),
wherein the measuring cell (1) has a channel (2) which permits the feed and discharge of the suspension and which allows the entry, passage and exit of the monochromatic collimated light beam (3) in the direction of its length,
wherein the measuring cell has a polished surface, the cell geometry of the measuring cell (1) in the plane of the channel represents a curved surface (7), the cross section of the measuring cell in the plane perpendicular to the plane of the channel is curved and the measuring cell is formed of transparent material, and by which all of the light (4) scattered at a particular angle by the suspension present in the measuring cell is focused in the plane of the channel at a point outside of the measuring cell, this being achieved through the curved surface (7) of the measuring cell (1),
wherein the light-sensitive detectors (5) are arranged at the points onto which the scattered light is focussed, so that they collect the light (4) scattered by the suspension which passes through the channel and the translucent material of the measuring cell (1).

2. Device according to claim 1,
**characterised in that**
the geometry of the measuring cell (1) comprises a curved surface (7) of an ellipsoid, a hyperbolic form, a parabolic form, or is in the form of a circle.

3. Device according to one of the preceding claims,
**characterised in that**
the measuring cell can preferably be made of glass, polymer, or a combination of said materials, or a liquid, preferably with a higher refractive index than that of a suspension to be measured, or air.

4. Device according to one of the preceding claims,
**characterised in that**
the light-sensitive detectors (5) have an aperture system (6) which defines the angular range to be observed, provided the focus lies within the aperture.

5. Device according to one of the preceding claims,
**characterised in that**
no detectors are arranged on the side (8) opposite the curved surface (7) and a light-absorbing device absorbs light which is not to be collected by the detectors.

6. Device according to one of the preceding claims,
**characterised in that**
the monochromatic collimated light beam (3) has a cross-sectional dimension which is less than that of the channel.

7. Method for measuring the light (4) scattered by molecules contained in a suspension by means of a device according to one of the preceding claims, wherein
a. a suspension is passed through a channel (2) which runs along a chord through a measuring cell (1),
b. a collimated monochromatic light beam (3) runs along this channel,
c. the parallel beams of light (4) scattered at a particular angle by the suspension present in the measuring cell penetrate through the curved form (7) of the measuring cell (1) and,
d. through the polished, curved form of the measuring cell (1), are focused in the plane of the channel at a point outside of the measuring cell, and
e. the detectors (5) arranged at the points onto which the scattered light is focussed receive the focussed light, wherein
the measuring cell (1) represents a curved surface (7) in the plane of the channel (2) and in the plane perpendicular to the plane of the channel (2).

## Revendications

1. Dispositif destiné à mesurer les propriétés de dispersion de la lumière d'une suspension, comprenant une cellule de mesure (1), à travers laquelle est conduite une suspension irradiée par un faisceau lumineux monochrome collimaté (3), et des capteurs (5) photosensibles,
dans lequel la cellule de mesure (1) comporte un canal (2) qui autorise l'amenée et l'évacuation de la suspension et qui permet l'entrée, la traversée et la sortie du faisceau lumineux monochrome collimaté (3) dans la direction de sa longueur,
dans lequel la cellule de mesure comporte une surface polie, la géométrie de cellule de la cellule de mesure (1) représente dans le plan du canal une surface courbe (7), la section transversale de la cellule de mesure est courbée dans un plan perpendiculairement au plan du canal, la cellule de mesure est formée en un matériau transparent et toute la lumière (4) dispersée sous un certain angle par la suspension présente dans la cellule de mesure est focalisée dans le plan du canal en un point en dehors de la cellule de mesure, ce qui est obtenu par la surface courbe (7) de la cellule de mesure (1),
dans lequel les capteurs photosensibles (5) sont agencés au niveau des points sur lesquels est focalisée la lumière dispersée de telle sorte qu'ils détectent la lumière (4) qui est dispersée par la suspension et qui passe à travers le canal et le matériau transparent de la cellule de mesure (1).

2. Dispositif selon la revendication 1,
**caractérisé en ce que**
la géométrie de la cellule de mesure (1) présente une surface courbe (7) d'un ellipsoïde, une forme hyperbolique, une forme parabolique ou la forme d'un cercle.

3. Dispositif selon l'une quelconque des revendications précédentes,
**caractérisé en ce que**
la cellule de mesure peut être fabriquée de préférence en verre, en un polymère ou en une combinaison desdits matériaux ou d'un liquide, de préférence avec un indice de réfraction supérieur à celui d'une suspension à mesurer, ou de l'air.

4. Dispositif selon l'une quelconque des revendications précédentes,
**caractérisé en ce que**
les capteurs photosensibles (5) comportent un système de diaphragme (6) qui définit la zone angulaire à observer dans la mesure où le focus se trouve dans le cadre.

5. Dispositif selon l'une quelconque des revendications précédentes,
**caractérisé en ce que**
sur le côté (8) opposé à la surface courbe (7), aucun capteur n'est agencé et un dispositif absorbant la lumière absorbe de la lumière qui ne doit pas être détectée par les capteurs.

6. Dispositif selon l'une quelconque des revendications précédentes,
**caractérisé en ce que**
le faisceau lumineux monochrome collimaté (3) présente une dimension en section transversale qui est plus petite que celle du canal.

7. Procédé de mesure de la lumière (4) dispersée au niveau de molécules se trouvant dans une suspension au moyen d'un dispositif selon l'une quelconque des revendications précédentes, dans lequel
a. une suspension est conduite à travers un canal (2), qui s'étend le long d'une corde à travers une cellule de mesure (1),
b. un faisceau lumineux monochrome collimaté (3) passe dans le sens de la longueur vers ce canal,
c. les rayons lumineux (4) parallèles dispersés sous un certain angle par la suspension présente dans la cellule de mesure traversent la forme courbe (7) de la cellule de mesure (1),
d. sont focalisés par la forme courbe et polie de la cellule de mesure (1) dans le plan du canal en un point en dehors de la cellule de mesure et
e. les capteurs (5) agencés au niveau des points sur lesquels est focalisée la lumière dispersée reçoivent la lumière focalisée,
la cellule de mesure (1) représentant dans le plan du canal (2) et dans le plan perpendiculaire au plan du canal (2) une surface courbe (7).
